# EUROPÄISCHE PATENTANMELDUNG

(11) **EP 3 413 415 A1**
(43) Veröffentlichungstag der Anmeldung: **12.12.2018**
(21) Anmeldenummer: 17175209.0
(22) Anmeldetag: 09.06.2017
(51) Int. Cl.: H02G 3/08, H01R 25/00

(54) **STECKDOSENLEISTE UND BEFESTIGUNGSANORDNUNG FÜR EINE SOLCHE**

(71) Anmelder: Schneikel Electronics GmbH, 8954 Geroldswil (CH)
(72) Erfinder: Bhend, Andreas, 5408 Ennetbaden (CH); Schneider, Walter, 8954 Geroldswil (CH); Trullols, Salvador, 17252 Sant Antoni de Calonge (ES)
(74) Vertreter: Schalch, Rainer

(57) **Zusammenfassung**

Eine Steckdosenleiste (1), umfasst ein längliches Gehäuse (2) und mehrere, von diesem aufgenommene Steckdosen (10), wobei das Gehäuse (2) zwei Seitenwände (3), zwei Stirnwände (4, 4') und einen Boden (5) aufweist. Im Boden (5) ist mindestens eine Bodennut (6) vorgesehen, welche sich in Längsrichtung der Steckdosenleiste erstreckt, wobei die Bodennut im Querschnitt in ihrem Inneren (7) breiter ist, als an ihrer Nutenöffnung (8), und wobei in mindestens einer der Stirnwände (4) mindestens eine Nut (16) vorgesehen ist, welche sich vom Boden des Gehäuses zu dessen Oberseite (14) hin erstreckt, wobei die Nut im Querschnitt gesehen in ihrem Inneren (17) breiter ist, als an deren Nutenöffnung (18). In Kombination mit einer Befestigungsanordnung, welche in die Nuten eingreifende Ausformungen aufweist, ergibt sich eine einfach auf verschiedene Weise befestigbare Steckdosenleiste.

## Beschreibung

### Gebiet der Erfindung

Die Erfindung betrifft eine Steckdosenleiste. Ferner betrifft die Erfindung eine Befestigungsanordnung in Kombination mit einer solchen Steckdosenleiste.

### Hintergrund

Steckdosenleisten sind bekannt. Sie besitzen ein geschlossenes, langgestrecktes Gehäuse und weisen an ihrer Oberseite eine Mehrzahl von Buchsen zur Aufnahme von Steckern auf. Ein in der Regel stirnseitig aus dem Gehäuse herausgeführtes Elektrokabel dient dem Anschluss der Steckdosenleiste an einen Stromanschluss. Die Buchsen der Steckdosenleiste sind innerhalb des Gehäuses mit dem Elektrokabelanschluss der Steckdosenleiste verdrahtet. Für die Befestigung einer Steckdosenleiste an einem Möbelstück schlägt DE 203 18 352 U1 eine Montageleiste mit einer Halteeinrichtung vor, wobei Montageleiste an einem Möbelstück befestigt werden kann und wobei die Steckdosenleiste ein Rasteinrichtung aufweist, die an der Halteeinrichtung eingerastet werden kann. FR 2 610 768 schlägt eine Halteleiste vor, an welcher verschiebbare Elemente angeordnet sind, die eine Steckdosenleiste halten können. In der DE-OS 29 00 148 wird es vorgeschlagen, an den Stirnseiten einer Steckdosenleiste eine Ausnehmung mit einem Boden und einem Schraubenloch vorzusehen, damit die Steckdosenleiste direkt mit einer Schraube an einer Unterlage festschraubbar ist.

### Darstellung der Erfindung

Der Erfindung liegt die Aufgabe zu Grunde, eine Steckdosenleiste zu schaffen, die mittels einer Befestigungsanordnung auf verschiedene Weise und somit für viele Anwendungsbereiche und Einsatzgebiete einfach befestigbar ist.

Diese Aufgabe wird mit einer Steckdosenleiste nach Anspruch 1 gelöst. Ferner wird die Aufgabe durch die Kombination einer solchen Steckdosenleiste mit einer Befestigungsanordnung nach Anspruch 9 gelöst.

Es ergeben sich dadurch vielseitige Einsatzgebiete und Kombinationen, wie nachfolgend noch erläutert wird.

Bevorzugt ist bei der Steckdosenleiste auch im Boden mindestens eine Bodennut vorhanden und weiter bevorzugt sind bei der Steckdosenleiste im Boden zwei Bodennuten und stirnwandseitig zwei Nuten vorgesehen, was eine besonders stabile Befestigung ergeben kann. Bevorzugt ist dabei, dass die Bodennut oder die Bodennuten und die Nut oder die Nuten mit ihren stirnseitigen Öffnungen aneinander angrenzen.

Bevorzugt ist weiter, dass der Boden der Steckdosenleiste, allenfalls mit der mindestens einen Bodennut, und die Seitenwände des Gehäuses einstückig von einem im Wesentlichen U-förmigen Metallprofil, insbesondere einem Aluminiumprofil gebildet sind, und die Stirnwände mittels Schrauben in Ausnehmungen von innen an den Seitenwänden vorgesehenen Rippen befestigt sind. Dies ergibt einen besonders einfachen und stabilen Aufbau. Aber auch eine Ausbildung des Bodens und der Seitenwände und auch der Stirnwände aus Kunststoff, z.B. auch aus einem kohlenfaserverstärktem Kunststoff, ist möglich. Weiter ist es bevorzugt, dass die Bodennut oder die Bodennuten und die stirnwandseitige Nut oder Nuten dieselbe Querschnittsform aufweisen und insbesondere eine im Wesentlichen schwalbenschwanzförmige Querschnittsform aufweisen.

Bei der Befestigungsanordnung kann das Teil eine Befestigungsplatte sein, welche auf ihrer einen Seite die mindestens eine Ausformung und vorzugsweise zwei Ausformungen aufweist. Dies ergibt eine besonders einfache Befestigungsmöglichkeit. Die Befestigungsplatte kann mit Schrauben und Dübeln an einer Wand oder einem anderen Bauteil befestigt werden oder auch mit einem Kabelbinder an einem rohrförmigen Bauteil. Das Teil kann auch ein Nutenstein sein. An solchen Nutensteinen können verschiedene Befestigungsglieder befestigbar, zum Beispiel anschraubbar sein, welche zum Beispiel Magnete oder Ösen sein können. Oder das Teil, zum Beispiel auch als Nutenstein, kann beidseits Ausformungen aufweisen, um zwei Steckdosenleisten miteinander zu verbinden.

In einer anderen bevorzugten Ausführungsform weist die Befestigungsanordnung ein Teil auf, dass als ein plattenförmiger Deckel ausgeführt ist und mit einem abgewinkelten Befestigungsflansch versehen ist, welcher die Ausformung aufweist, und die Befestigungsanordnung weist weiter einen durch den Deckel abdeckbaren Rahmen für die Steckdosenleiste auf, in welchem diese um eine zu ihrer Längsachse parallele Achse schwenkbar gehalten ist.

Eine besonders einfache Montage in einer Platte ergibt sich, wenn das Teil ein rechteckförmiger Rahmen ist, welcher innen an den Schmalseiten je mindestens eine der Ausformungen aufweist, derart, dass die Steckdosenleiste mittels der stirnwandseitigen Nuten im Rahmen gehalten ist. Eine weitere bevorzugte Ausführung zur Befestigung der Steckdosenleiste an einer Platte ergibt sich, wenn das Teil eine Schraubzwinge ist, welche die mindestens eine Ausformung trägt.

Bei einer weiteren bevorzugten Befestigungsanordnung ist das Teil eine Hülse zur verschieblichen Aufnahme der Steckdosenleiste, wobei die mindestens eine Ausformung hülseninnenseitig angeordnet ist und eine Gleitschiene für die Steckdosenleiste bildet. Dabei ist es weiter bevorzugt, wenn die Befestigungsanordnung einen Deckel aufweist, welcher mindestens eine Ausformung zur Verbindung mit einer stirnwandseitigen Nut der Steckdosenleiste aufweist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 eine schaubildliche Darstellung eines Ausführungsbeispiels einer Steckdosenleiste gemäss der Erfindung mit Blick auf die Steckdosen der Steckdosenleiste;
Figur 2 eine schaubildliche Ansicht auf den Boden bzw. die Unterseite der Steckdosenleiste von Figur 1;
Figur 3 eine schaubildliche Ansicht auf das geöffnete Gehäuse einer Steckdosenleiste mit einer unverdrahteten Steckdose zur Erläuterung von deren Anordnung im Gehäuse;
Figur 4 eine Steckdosenleiste und eine erste Ausführung eines Befestigungsteils der Befestigungsanordnung;
Figur 5 das Befestigungsteil in Ansicht auf dessen Ausformungen zur Einführung der Steckdosenleiste;
Figur 6 eine weitere Ausführung der Befestigungsanordnung zum Einbau einer Steckdosenleiste in einer Arbeits- oder Tischplatte in Explosionsdarstellung;

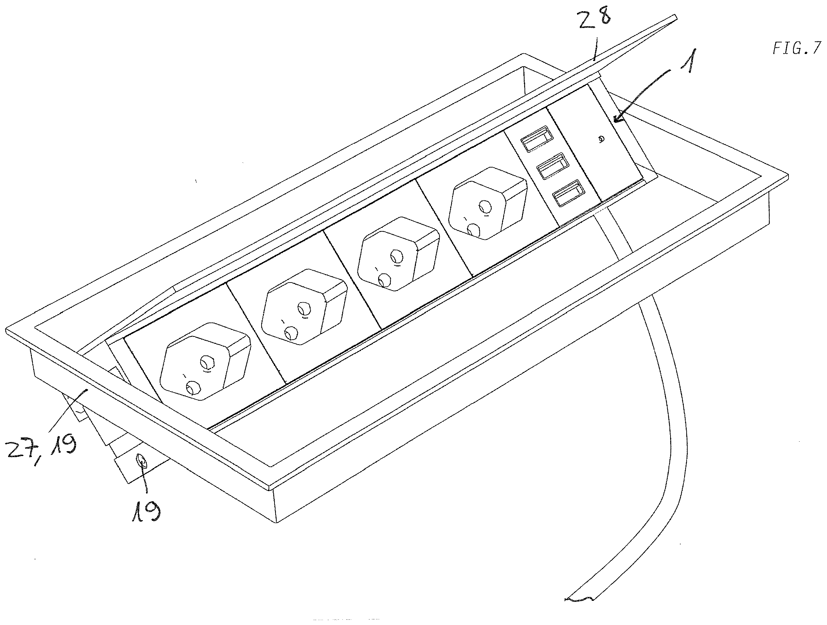

Figur 7 die Ausführung von Figur 6 im zusammengesetzten Zustand;
Figur 8 eine weitere Ausführung der Befestigungsanordnung;
Figur 9 eine Ausführung der Befestigungsanordnung zur Befestigung der Steckdosenleiste an einer Platte;
Figur 10 eine Ausführung der Befestigungsanordnung zum versenkten Einbau der Steckdosenleiste.

### Weg(e) zur Ausführung der Erfindung

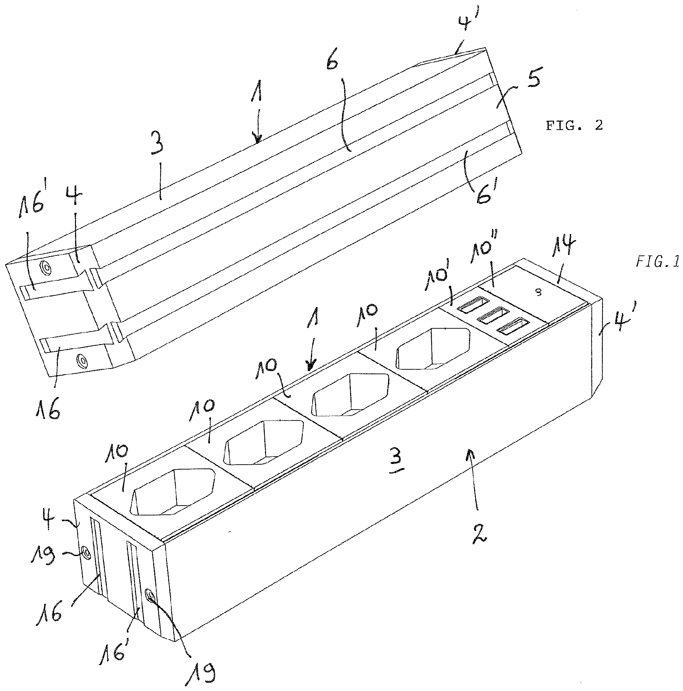

Die Figuren 1 bis 3 zeigen ein Ausführungsbeispiel einer erfindungsgemässen Steckdosenleiste in schaubildlicher Darstellung. Dabei ist in den Figuren 1 und 2 ersichtlich, dass die Steckdosenleiste 1 ein längliches, im Wesentlichen quaderförmiges Gehäuse 2 aufweist. In diesem sind Steckdosen bzw. Steckanschlüsse 10 angeordnet, welches in der Regel Netzspannungssteckdosen sind. Zusätzlich, oder anstelle, von Steckdosen 10 können weitere Steckanschlüsse vorgesehen sein, zum Beispiel USB-Buchsen 10', die von einem Netzteil 10'' versorgt werden. Es können zusätzliche oder andere Anschlüsse und/oder Schalter und/oder Anzeigen vorgesehen sein, die generell als Module bezeichnet werden können, was hier nicht weiter erläutert wird. In diesen Figuren nicht gezeigt ist das Netzanschlusskabel, welches die Steckdosenleiste in der Regel stirnseitig verlässt, in diesem Beispiel vorzugsweise auf der Seite des Netzteils 10''. Es können auch, je nach Art der Steckanschlüsse bzw. Steckdosen, andere Kabel als Netzkabel zur Speisung der Dosen in die Steckdosenleiste geführt oder dort ebenfalls über Steckdosen angeschlossen sein, zum Beispiel Datenkabel, HDMI-Kabel, Audio-Kabel usw., so dass auch gar kein Netzkabel sondern nur ein oder mehrere andere Kabel in die Steckdosenleiste hineinführen, um die entsprechenden Steckdosen zu speisen. Die Länge L der Steckdosenleiste kann länger oder kürzer sein als dargestellt und wird durch die Anzahl Steckdosen und zusätzlicher anderer Module bestimmt, die bereitgestellt werden sollen.

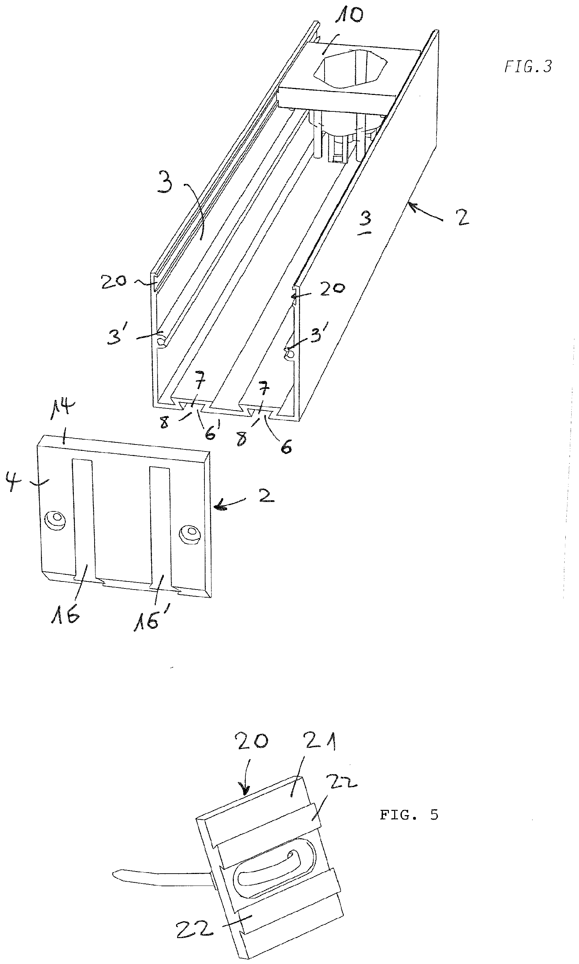

Das Gehäuse 2 der Steckdosenleiste 1 weist eine Unterseite, bzw. einen Boden 5, und weist Seitenwände 3 auf. Die Oberseite 14 des Gehäuses kann seitlich sehr schmal ausgeführt sein und bei den Stirnwänden 4 des Gehäuses breiter sein. Die beiden Stirnwände 4 und 4' schliessen das Gehäuse beidseits stirnseitig ab und sind vorzugsweise mit Schrauben 19 in Bereichen der Seitenwände 3 befestigt. Figur 3 zeigt eine Steckdosenleiste in geöffnetem Zustand und nur mit einer der Steckdosen 10 zur Erläuterung der bevorzugten Ausführung des Gehäuses. Dieses ist vorzugsweise aus einem U-förmigen Profil gebildet, welches den Boden und die Seitenwände des Gehäuses bildet. Das Profil ist bevorzugt ein Metallprofil und insbesondere ein Aluminiumprofil. Dieses weist an den Seitenwänden innen Rippen 3' mit einer sich in Längsrichtung erstreckenden Ausnehmung auf, in welche die Schrauben 19 zur Befestigung der Stirnwände 4 einschraubbar sind.

Die Steckdosen und allfällige zusätzliche Module der Steckdosenleiste werden ausserhalb des Gehäuses vorverdrahtet und können dann in das Gehäuse eingeführt werden. Es ist bevorzugt, dass die Steckdosen und allfällige weitere Module seitlich mit Ausformungen versehen sind, welche in Längsnuten 20 innen an den Seitenwänden des Gehäuses eingeführt werden können, was die Steckdosen im Gehäuse in Steckrichtung und deren Gegenrichtung festlegt. Nachdem die vorverdrahteten Steckdosen und Module so in das Profil eingeführt und an ein Netzkabel angeschlossen worden sind, kann das Gehäuse 2 durch die Stirnwände 4, 4' verschlossen werden. Diese fixieren die Steckdosen und Module in Längsrichtung der Steckdosenleiste.

Gemäss der Erfindung ist mindestens eine Nut in mindestens einer der beiden Stirnwände vorhanden, welche Nut sich in der jeweiligen Stirnwand vom Boden zur Oberseite der Steckdosenleiste erstreckt. Bevorzugt ist weiter mindestens eine sich in Längsrichtung des Gehäuses beziehungsweise der Steckdosenleiste erstreckende Nut im Boden, hier auch als Bodennut bezeichnet, des Gehäuses vorgesehen. Die im Boden des Gehäuses verlaufende Bodennut ist an mindestens einer Stirnseite des Gehäuses stirnseitig offen, allenfalls auch an beiden Stirnseiten. Die sich in der Stirnwand erstreckende Nut ist mindestens bodenseitig offen, vorzugsweise ist sie nur bodenseitig offen und am oberen Ende der Nut stirnseitig geschlossen.

Im gezeigten Beispiel sind zwei längsverlaufende Bodennuten 6 und 6' vorgesehen. Bei zwei oder mehr als zwei Bodennuten laufen diese parallel in Längsrichtung der Steckdosenleiste. Im gezeigten Beispiel sind ferner in der in der Figur links dargestellten Stirnwand 4 zwei Nuten 16 vorgesehen. Die Nuten 6, 6' im Boden sind an deren Ende bei der Stirnwand 4 offen und an ihrem anderen Ende bei der anderen Stirnwand 4' geschlossen, sie könnten indes auch dort offen sein. Die Nuten 16 und 16' in der linken Stirnwand 4 sind bodenseitig offen und sind an ihrem oberen Ende geschlossen. Wie besonders gut in Figur 3 ersichtlich, sind die Bodennuten 6 und 6' so ausgeführt, dass die Nut in ihrem Inneren 7 breiter ist als die Nutenöffnung 8. In der dargestellten Form ist die Nut im Querschnitt "schwalbenschwanzförmig" bzw. trapezförmig. Dies erlaubt durch Einführung eines entsprechend schwalbenschwanzförmigen Befestigungsteils in die Nut, im Sinne einer Nut- und Federverbindung, eine formschlüssige Verbindung mit einem Befestigungsteil einer Befestigungsanordnung, was nachfolgend noch genauer erklärt wird. Auch die Nuten 16 und 16' in der Stirnwand 4 sind derartig ausgeführt. Anstelle der Trapezform können auch andere Querschnittformen für die Nuten und Bodennuten vorgesehen sein, solange die Längsöffnung der Nut kleiner ist als die Innenseite der Nut, so dass stirnseitig in die Nut eingeführte entsprechend geformte Teile in der Nut formschlüssig gehalten werden.

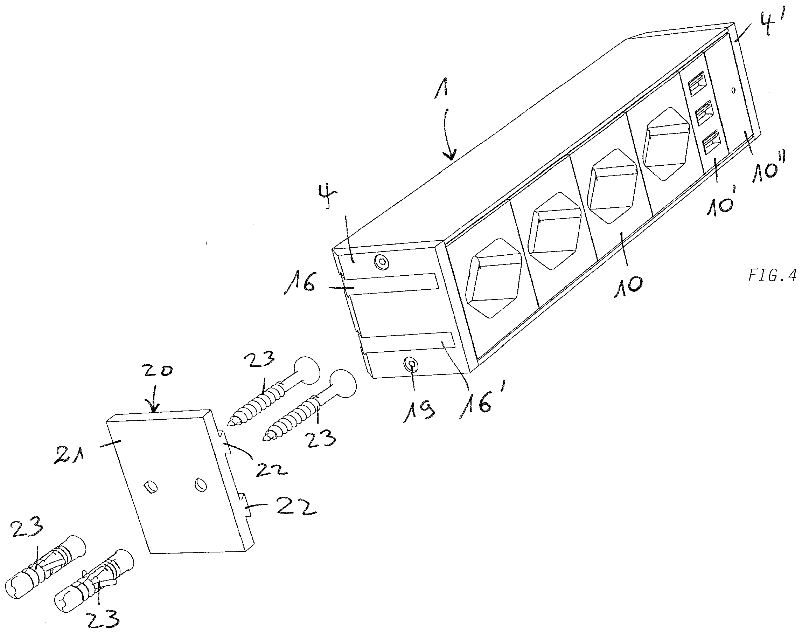

Entsprechend ist in Figur 4 und in Figur 5 ein Befestigungsteil 21 der Befestigungsanordnung 20 gezeigt, welche Befestigungsanordnung zur Befestigung der Steckdosenleiste 1 dient. Das Befestigungsteil 21 weist zwei Ausformungen 22 auf, welche an die Nuten 6 und 6' bzw. an die Nuten 16 und 16 angepasst sind. Im gezeigten Beispiel sind das schwalbenschwanzförmige Ausformungen 22, welche in die trapezförmigen Nuten von deren Stirnseite her einschiebbar sind. In Figur 4 ist dargestellt, dass die Befestigungsanordnung 20 Schrauben und Dübel 23 umfasst, mittels welchen das Befestigungsteil 21 an einer Wand oder einer Platte befestigbar ist. Die Steckdosenleiste 1 kann dann mit ihrer Stirnwand 4 oder mit ihrem Boden 5 an dem Befestigungsteil 21 befestigt werden, indem die Ausformungen 22 in die entsprechenden Nuten eingeschoben werden. Wird das Befestigungsteil 21 horizontal liegend an einer Platte befestigt, so kann die Steckdosenleiste aufrecht stehend mittels der Nuten 16, 16' am Befestigungsteil eingeschoben werden. Bevorzugt ist dann eine Sicherung gegen ein Herausziehen vorgesehen, zum Beispiel ein Klipp. An den dann vertikal stehenden Bodennuten können entlang der Höhe verteilt Kabelringe zur Führung der Kabel der eingesteckten Stecker angeordnet werden.

Figur 5 zeigt, dass die Befestigungsanordnung einen Kabelbinder 24 anstelle der Schrauben und Dübel 23 verwendet, um das Befestigungsteil an einem anderen Gegenstand zu fixieren. Das Befestigungsteil kann auch nur von einem oder mehreren Nutensteinen gebildet sein, welcher an die Nut angepasst ist und die Befestigung von weiteren Haltemitteln erlaubt, wie zum Beispiel Magneten oder welche auf beiden Seiten Ausformungen aufweisen, mit denen zwei oder mehr Steckdosenleisten verbunden werden können.

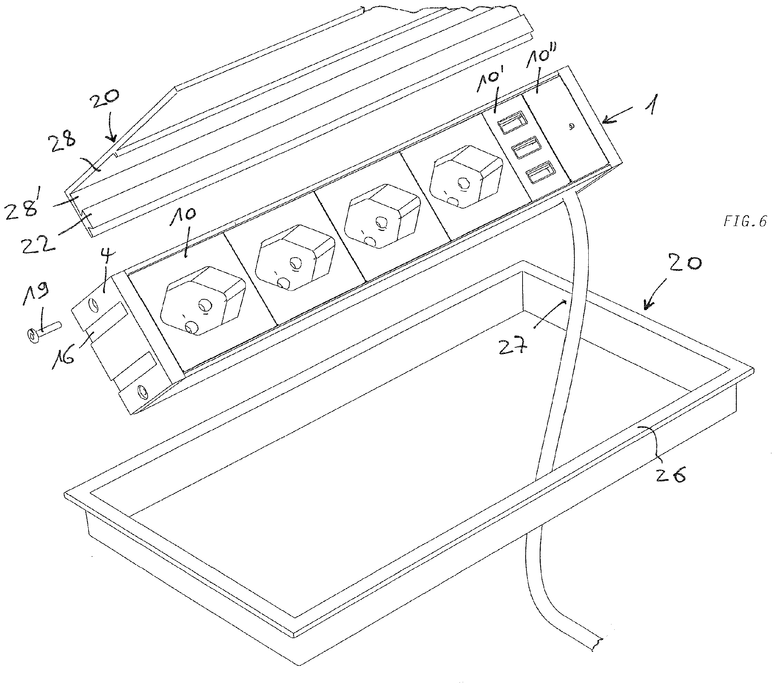

Figur 6 zeigt ein weiteres Beispiel der Steckdosenleiste 1 und deren Befestigungsanordnung. Dabei ist die Steckdosenleiste wie vorgängig beschrieben ausgeführt. Die Befestigungsanordnung 20 weist einen rechteckigen Rahmen 26 auf, dessen Länge im Wesentlichen der Länge der Steckdosenleiste entspricht. Auf jeder Seite der Steckdosenleiste 1 dient eine der Schrauben 19, welche zur Befestigung der Stirnwände 4 und 4' vorgesehen sind, als Drehachse für die schwenkbare Anordnung der Steckdosenleiste im Rahmen 26, wenn die Schrauben 19 durch Schraubenlöcher 27 des Rahmens geführt und dann wie beschrieben am Gehäuse der Steckdosenleiste eingeschraubt werden. Die Breite des Rahmens ist so gewählt, dass in der Steckdosenleiste eingesteckte Stecker und die von diesen Steckern ausgehenden Kabel im Rahmen Platz finden. Ein Deckel 28 der Befestigungsanordnung weist an einer Seite einen abgewinkelten Befestigungsflansch 28' auf, der eine langestreckte Ausformung 22 oder mehrere kürzere Ausformungen auf, welche in die bodenseitige Nut 6' eingeführt ist, um den Deckel 28 am Gehäuse der Steckdosenleiste zu befestigen. Der Deckel 28 dient auch als Bedienungsgriff für das Öffnen oder Schliessen der in die Arbeits- oder Tischplatte mittels der Befestigungsanordnung 20 eingebauten Steckdosenleiste.

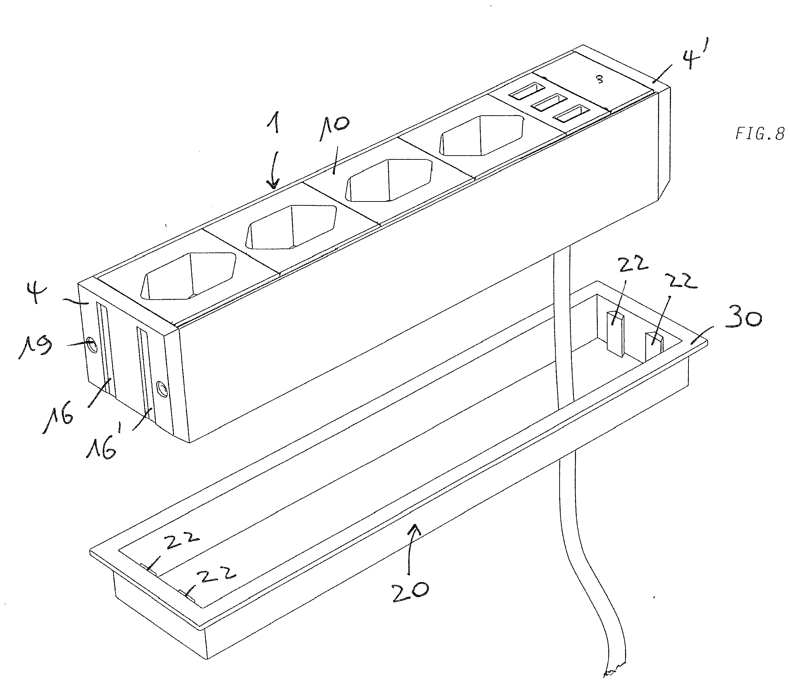

Figur 8 zeigt eine weitere Variante der Befestigungsanordnung 20, bei welcher diese ein rechteckförmiges rahmenförmiges Befestigungsteil 30 aufweist, welches jeweils an den Schmalseiten innen Ausformungen 22 aufweist, welche in die Nuten 16 und 16' der Stirnwände 4 und 4' einführbar sind. Bei diesem Beispiel sind somit beide Stirnwände der Steckdosenleiste mit Nuten versehen. Das Netzkabel der Steckdosenleiste ist in diesem Beispiel bodenseitig aus der Steckdosenleiste herausgeführt.

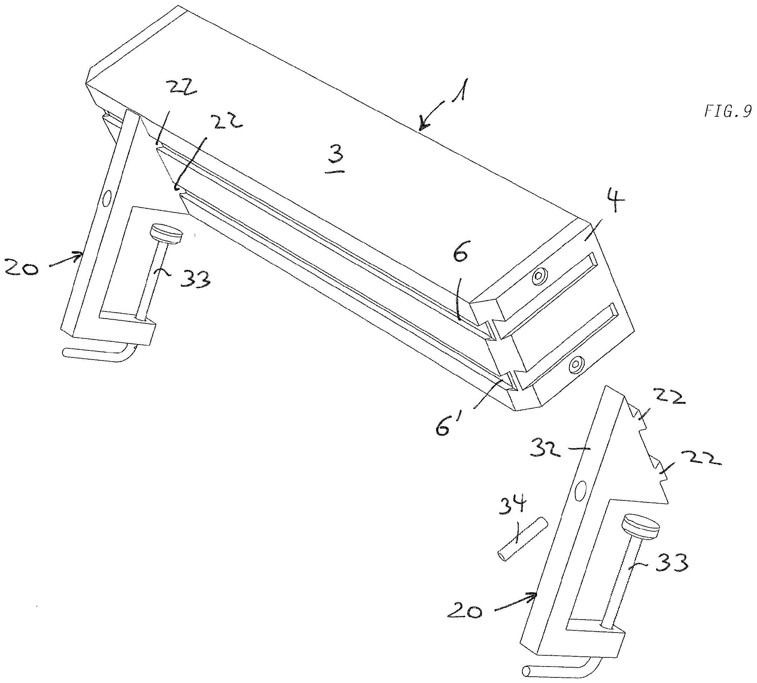

Figur 9 zeigt ein weiteres Beispiel der Befestigungsanordnung 20 und der Steckdosenleiste. Die Befestigungsanordnung weist hier Schraubzwingen 32 auf, welche mit ihren Spannschrauben 33 auf bekannte Weise an einer Platte befestigt werden können. Zur Befestigung an der Steckdosenleiste 1 weisen die Schraubzwingen andererseits Ausformungen 22 auf, welche an die Form der Nuten 6 und 6' angepasst sind, so dass die Steckdosenleiste mit ihrem Boden bzw. den Nuten an den Schraubzwingen befestigbar ist, wie aus der Figur ersichtlich. In Längsrichtung der Steckdosenleiste kann eine Befestigung ferner mit den Klemmschrauben 34 bewirkt werden, mit welchen die Zwingen 32 gegen den Boden der Steckdosenleiste verspannt werden können.

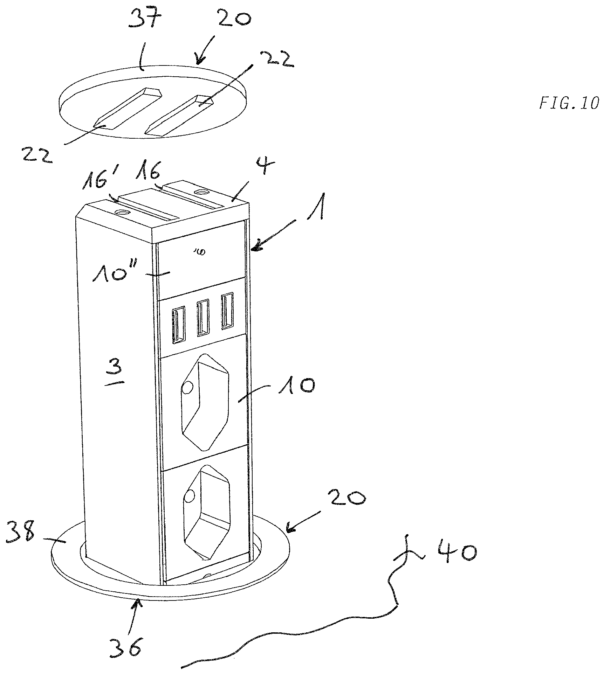

Figur 10 zeigt ein weiteres Beispiel der Befestigungsanordnung. Diese weist ein hülsenförmiges Element 36 auf, welches versenkt in einem Möbel eingebaut ist, von welchem nur die Oberseite 40 angedeutet ist. Von der Hülse ist dann, wie dargestellt, nur ein oberer Kragen 38 sichtbar. Die Hülse bildet eine Aufnahme für die Steckdosenleiste 1, wobei die Hülse innenseitig die Ausformungen aufweist, die mit den bodenseitigen Nuten der Steckdosenleiste als Gleitschienen für die Steckdosenleiste zusammenwirken. Dies erlaubt ein Herausziehen der Steckdosenleiste aus der Hülse oder Hineinstossen der Steckdosenleiste in die Hülse. Es können Federmittel und/oder Reibungsbremsen und/oder Rastmittel in oder an der Hülse vorgesehen sein, die das Herausziehen und Hineinstossen der Steckdosenleiste beeinflussen, was dem Fachmann grundsätzlich bekannt ist und hier nicht weiter erläutert wird. An der einen Stirnwand 4' der Steckdosenleiste kann ein Deckel 37 der Befestigungsanordnung, der ebenfalls mit Ausformungen 22 versehen ist, mittels der Nuten 16 und 16' der Stirnwand 4' befestigt sein. Der Deckel dient als Griff zur Verschiebung der Steckdosenleiste in der Hülse.

Eine Steckdosenleiste 1, umfasst somit ein längliches Gehäuse 2 und mehrere, von diesem aufgenommene Steckdosen 10, wobei das Gehäuse 2 zwei Seitenwände 3, zwei Stirnwände 4, 4' und einen Boden 5 aufweist. Im Boden ist bevorzugt mindestens eine Bodennut 6 vorgesehen, welche sich in Längsrichtung der Steckdosenleiste erstreckt, wobei die Bodennut im Querschnitt innen breiter ist, als an ihrer Nutenöffnung 8. In mindestens einer der Stirnwände 4, 4' ist mindestens eine Nut 16 vorgesehen ist, welche sich vom Boden des Gehäuses zu dessen Oberseite 14 hin erstreckt, wobei die Nut im Querschnitt gesehen innen 17 breiter ist, als an der Nutenöffnung 18. In Kombination mit einer Befestigungsanordnung, welche in die Nuten eingreifende Ausformungen aufweist, ergibt sich eine einfach auf verschiedene Weise befestigbare Steckdosenleiste.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Steckdosenleiste (1), umfassend ein längliches Gehäuse (2) und mehrere, von diesem aufgenommene Steckdosen (10), wobei das Gehäuse (2) zwei Seitenwände (3), zwei Stirnwände (4, 4') und einen Boden (5) aufweist, und wobei in mindestens einer der Stirnwände (4) mindestens eine Nut (16) vorgesehen ist, welche sich vom Boden des Gehäuses zu dessen Oberseite (14) hin erstreckt, wobei die Nut, im Querschnitt gesehen, in ihrem Inneren (17) breiter ist, als an deren Nutenöffnung (18).

2. Steckdosenleiste nach Anspruch 1, wobei im Boden (5) mindestens eine Bodennut (6) vorgesehen ist, welche sich in Längsrichtung der Steckdosenleiste erstreckt, wobei die Bodennut, im Querschnitt gesehen, in ihrem Inneren (7) breiter ist, als an ihrer Nutenöffnung (8).

3. Steckdosenleiste nach Anspruch 1, wobei in mindestens einer der Stirnwände zwei Nuten (16, 16') vorgesehen sind.

4. Steckdosenleiste nach Anspruch 2 oder 3, wobei im Boden zwei parallel verlaufende Bodennuten (6, 6') vorgesehen sind.

5. Steckdosenleiste nach einem der Ansprüche 2 bis 4, wobei die Bodennut oder die Bodennuten (6, 6') und die Nut oder die Nuten (16, 16') mit ihren stirnseitigen Öffnungen aneinander angrenzen.

6. Steckdosenleiste nach einem der Ansprüche 1 bis 5, wobei diese zusätzlich zu den Steckdosen (10) weitere Module (10', 10") aufweist.

7. Steckdosenleiste nach einem der Ansprüche 1 bis 6, wobei der Boden (5) und die Seitenwände des Gehäuses einstückig von einem im Wesentlichen U-förmigen Metallprofil, insbesondere einem Aluminiumprofil gebildet sind, und wobei die Stirnwände (4, 4') mittels Schrauben (19) in Ausnehmungen von innen an den Seitenwänden (3) vorgesehenen Rippen (3') befestigt sind.

8. Steckdosenleiste nach einem der Ansprüche 2 bis 7, wobei die Bodennut oder die Bodennuten und die stirnwandseitige Nut oder die stirnwandseitigen Nuten dieselbe Querschnittsform aufweisen und insbesondere eine im Wesentlichen schwalbenschwanzförmige Querschnittsform aufweisen.

9. Befestigungsanordnung (20) in Kombination mit einer Steckdosenleiste nach einem der Ansprüche 1 bis 8, umfassend mindestens ein Teil (21; 28; 30; 32; 36), welches mindestens eine Ausformung (22) aufweist, welche an die Querschnittsform der mindestens einen stirnwandseitigen Nut angepasst und zur Formschlussverbindung mit der mindestens einen stirnwandseitigen Nut ausgebildet ist.

10. Befestigungsanordnung nach Anspruch 9 in Kombination mit einer Steckdosenleiste nach einem der Ansprüche 2 bis 8, umfassend mindestens ein Teil (21; 28; 30; 32; 36), welches mindestens eine Ausformung (22) aufweist, welche an die Querschnittsform der mindestens einen Bodennut angepasst und zur Formschlussverbindung mit der mindestens einen Bodennut ausgebildet ist.

11. Befestigungseinrichtung nach Anspruch 9 und 10, wobei das mindestens eine Teil eine Ausformung aufweist, welche an die identische Querschnittsform der mindestens einen Nut und der mindestens einen Bodennut angepasst und zur Formschlussverbindung mit der mindestens einen Nut und der mindestens einen Bodennut ausgebildet ist.

12. Befestigungsanordnung nach einem der Ansprüche 9 bis 11, wobei das Teil eine Befestigungsplatte (21) ist, welche auf ihrer einen Seite die mindestens eine Ausformung (22) aufweist, oder wobei das Teil ein Nutenstein ist, welcher auf seiner einen Seite die mindestens eine Ausformung aufweist.

13. Befestigungsanordnung nach einem der Anspruch 9 bis 11, wobei das Teil ein plattenförmiger Deckel (28) ist, der mit einem Befestigungsflansch (28') versehen ist, welcher die Ausformung (22) aufweist, und die Befestigungsanordnung weiter einen durch den Deckel (28) abdeckbaren Rahmen (26) für die Steckdosenleiste umfasst, in welchem diese um eine zu ihrer Längsachse parallele Achse schwenkbar gehalten ist.

14. Befestigungsanordnung nach Anspruch 9, wobei das Teil ein rechteckförmiger Rahmen (30) ist, welcher innen an den Schmalseiten je mindestens eine der Ausformungen (22) aufweist, derart, dass die Steckdosenleiste mittels der stirnwandseitigen Nuten im Rahmen gehalten ist.

15. Befestigungsanordnung nach einem der Ansprüche 9 bis 11, wobei das Teil eine Schraubzwinge (32) ist, welche die mindestens eine Ausformung (22) trägt.

16. Befestigungsanordnung nach Anspruch 10, wobei das Teil eine Hülse (36) zur verschieblichen Aufnahme der Steckdosenleiste ist, wobei die mindestens eine Ausformung hülseninnenseitig angeordnet ist und eine Gleitschiene für die Steckdosenleiste bildet.

17. Befestigungsanordnung nach Anspruch 16, wobei diese einen Deckel (37) aufweist, welcher mindestens eine Ausformung zur Verbindung mit einer stirnwandseitigen Nut aufweist.
